Europäisches Patentamt

European Patent Office

Office européen des brevets

(11) Publication number: **0 355 232**
**A2**

# EUROPEAN PATENT APPLICATION

(21) Application number: 88312449.7

(51) Int. Cl.⁴: **G01C 21/22**

(22) Date of filing: 30.12.88

(30) Priority: 23.08.88 JP 209053/88

(43) Date of publication of application:
28.02.90 Bulletin 90/09

(84) Designated Contracting States:
DE FR GB

(71) Applicant: AISIN AW CO., LTD.
10, Takane Fujii-cho
Anjo-shi Aichi-ken 444-11(JP)

Applicant: KABUSHIKI KAISHA
SHINSANGYOKAIHATSU
1-33-3, Hatagaya Shibuya-Ku
Tokyo 151(JP)

(72) Inventor: Nimura, Mitsuhiro
c/o AISIN AW CO., LTD. 10 Takane Fujii-cho
Anjo-shi Aichi-ken 444-11(JP)
Inventor: Nanba, Akimasa
c/o AISIN AW CO., LTD. 10 Takane Fujii-cho
Anjo-shi Aichi-ken 444-11(JP)
Inventor: Yokoyama, Shoji
c/o AISIN AW CO., LTD. 10 Takane Fujii-cho
Anjo-shi Aichi-ken 444-11(JP)

(74) Representative: Bubb, Antony John Allen et al
GEE & CO. Chancery House Chancery Lane
London WC2A 1QU(GB)

(54) Road drawing system for a navigation apparatus.

(57) A road drawing sustem fcr a navigation apparatus is adapted to output guidance information relating to a previously set course. The drawing system comprises a display device for displaying roads connected to a given route and intersections, road data indicating the relationship between roads and intersections, and map data for storing positional information on roads in the form of a multitude of coordinates.

In the road drawing system for a navigation apparatus of this invention, the coordinates indicating the position of a road to be displayed are read out from the road data and the map data, and the coordinates thus read out are turned, contracted or enlarged, and transformed into coordinates of the set drawing area of the display means.

EP 0 355 232 A2

## ROAD DRAWING SYSTEM FOR A NAVIGATION APPARATUS

This invention relates to a navigation apparatus for outputting guidance information relating to a course set prior to commencing a journey, and in particular, to a road drawing system for a navigation apparatus used for displaying a road map depicting a course set by the driver.

Navigation systems of the type adapted to guide drivers along a course set prior to travel are now being actively developed.

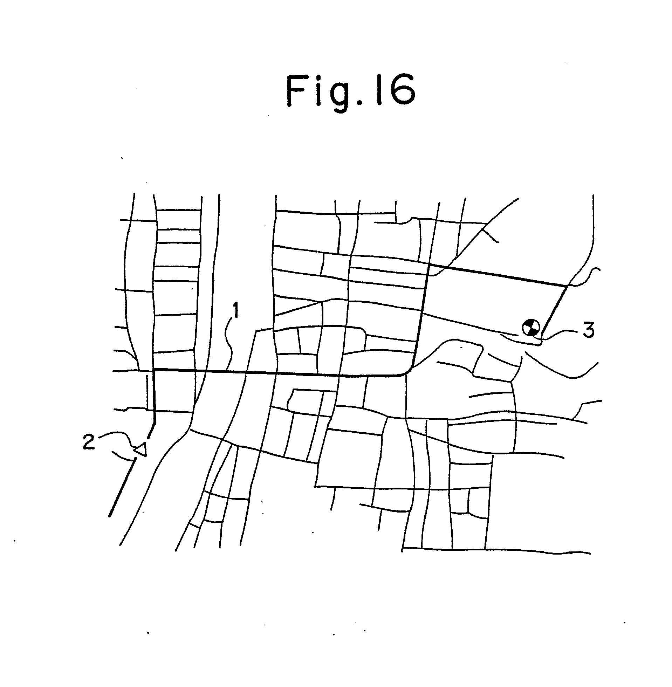

Fig. 16 illustrates a conventional navigation apparatus. In the drawing, the reference numerals 1, 2 and 3 indicate a course to be followed, the present position of a vehicle and a destination, respectively.

When specifying a previously set course with a conventional navigation apparatus, a map is displayed on a CRT screen, as seen in Fig. 16. The course 1, the present vehicle position 2, the destination 3 and the part of the course already completed are displayed on the screen by superimposition on this map.

Display of such a map in a conventional navigation device is, however, effected in a traveling vehicle on a screen as small as 6 inches square, such as an in-vehicle CRT, and the driver inevitably experiences some difficulty in absorbing the information on the course he is supposed to take. In addition, since the driver cannot continuously watch the screen for a prolonged time while driving the vehicle, he is obliged to grasp the necessary information by glancing at the screen momentarily. If under these circumstances unnecessary information is also displayed on the screen, the driver will experience a considerable difficulty in discriminating the various items of information from each other. He can even be misled by the display.

Furthermore, since course information is stored in the form of image date to be displayed as it is, it is quite difficult to turn the information in an arbitrary direction or enlarge it.

This invention aims at eliminating the above problems encountered in conventional navigation apparatuses. It is accordingly an object of this invention to provide a system in which road section information is not stored in the form of image date but is automatically displayed on the screen on the basis of road data.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

In accordance with this invention, there is provided a road drawing system for a navigation apparatus adapted to output guidance information relating to a previously set course, said system comprising display means for displaying roads connected to a given route and intersections, road data indicating the relationship between roads and intersections, and map data for storing positional information on roads in the form of a multitude of coordinates, the coordinates indicating the position of a road to be displayed being read out from said road data and said map data, and the coordinates thus read out being turned, contracted or enlarged, and transformed into coordinates of the set drawing area of said display means.

In the road drawing system for a navigation apparatus of this construction, no image date need be provided. Instead, sections of road are automatically drawn and displayed, and the guidance chart is thus displayed in a simple form. As a result, no unnecessary data is displayed on the screen, thus eliminating any risk of confusion. Accordingly, observation of the guidance chart for even a short period of time allows the driver to obtain the precise information he needs to follow the course he is supposed to take, which also gives him a feeling of security while driving.

Furthermore, displays of sections of road can be turned, enlarged or reduced in scale to allow the driver to observe them with ease, which also makes it easier to read the names of intersections.

## BRIEF DESCRIPTION OF THE DRAWINGS

Fig. 1 illustrates an embodiment of the road drawing system of this invention for use with a navigation apparatus;

Fig. 2 illustrates an embodiment of a system configuration to which a road drawing system of this invention for use with a navigation apparatus of this invention can be applied;

Fig. 3 is a block diagram schematically illustrating the guidance chart output processing section;

Fig. 4 shows a guidance course along which a vehicle is to be guided as indicated in the map being considered;

Fig. 5 illustrates data on the roads in the vicinity of the course shown in Fig. 4;

Fig. 6 illustrates a table of road no. data;

Fig. 7 illustrates a table of intersection data;

Fig. 8 illustrates node series data;

Fig. 9 is a flow chart for drawing sections of road;

Fig. 10 illustrates a data processing operation;

Fig. 11 is a flow chart for contraction of a drawing and setting a rotation coefficient;

Fig. 12 illustrates how coordinate transformation into a drawing area can be effected;

Fig. 13 is a flow chart for the process of node series drawing;

Figs. 14 and 15 concretely illustrate the drawing system; and

Fig. 16 illustrates a conventional guidance display.

Embodiments of this invention will now be described with reference to the attached drawings.

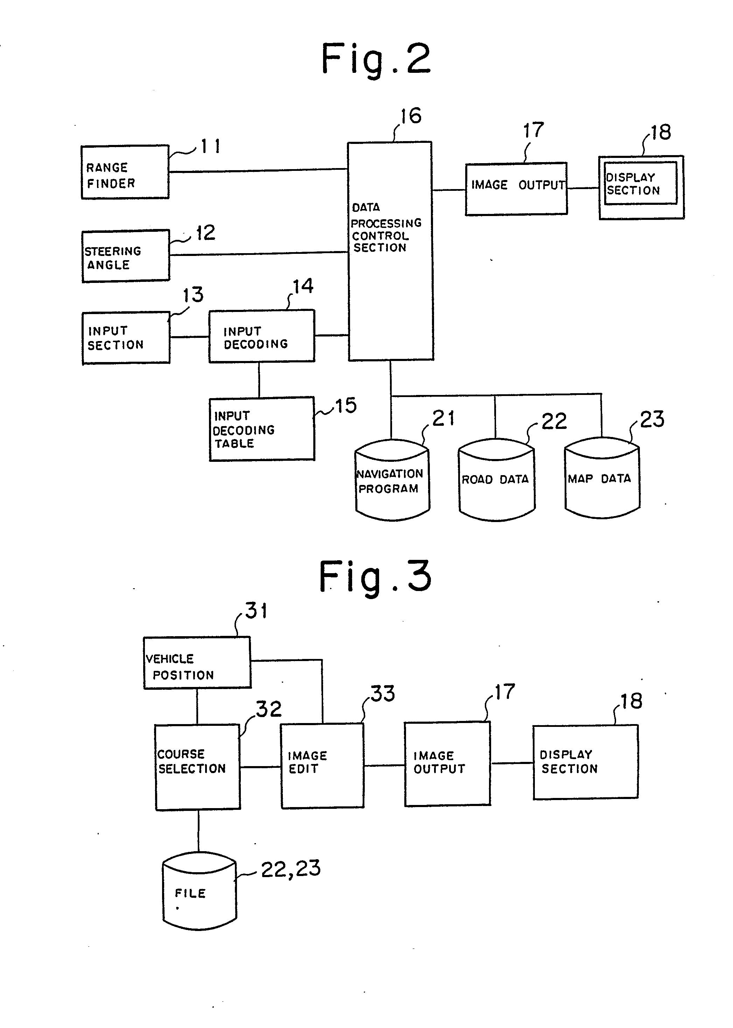

Fig. 2 shows an embodiment of a system configuration for a navigation apparatus to which this invention is applied.

As shown in Fig. 2, the system includes a range finder 11, a rudder angle meter 12, an input section 13, an input decoding section 14, an input decoding table 15, a data processing control section 16, an image output control section, 17, display section 18, and files 21 to 23.

The range finder 11 serves to measure the distance travelled by a vehicle. It may be of the type which detects and counts the number of times a wheel rotates, or of the type which detects acceleration to determine the distance travelled by integration. Other means of measurement may also be adopted.

The rudder angle meter serves to detect whether the vehicle has made a turn at an intersection. For example, it may be an optical rotation sensor attached to the shaft of a steering wheel, or a rotating type resistance volume. Alternatively, it may be an angle sensor attached to the wheel section of the vehicle.

The input section 13 consists of a joystick, a key or a touch panel. Alternatively, it may be of the type that is connected to the screen of the display section 18 on which the key or the menu is displayed. Data will then be input through the screen.

The input decoding section 14 serves to decode the data input through the input section 13 with reference to the input decoding table 15. When setting a course, the present position, the destination, etc. are input in the form of codes. The codes are then transformed into present position data, destination data; etc. with reference to the input decoding table 15. Accordingly, the input decoding table is set in accordance with the kind of data to be input through the input section 13.

The data processing control section 16 represents the nucleus of the navigation apparatus. When the destination and the present position is set in the input section 13, it searches for a course connecting the two points from the road data and sets the same. It then calls the navigation program of the course stored in the file 21 and executes navigation. The navigation programs are designed to display a guidance chart on the screen of the display section 18, to show photographs of the intersections or characteristic landmarks along the course, to indicate the distance to be covered to reach the next intersection, to display other kinds of information, and so on. The road data and the map data required for executing navigation are stored in the files 22 and 23. The image output control section 17 serves to control the images output to the display section 18.

When a course is selected by entering the present position and the destination through the input section 13 prior to travel, the data processing control section 16 reads out the navigation program corresponding to the course selected from the file 21 and executes the program.

The navigation program calculates the present vehicle position based on the measurement information from the range finder 11 and the rudder angle meter 12. It then displays the course guidance chart, indicates the present vehicle position, etc., shows objects characteristic of the course, indicates the positions of intersections, and so on. In the case of a course in which the driver has to cover a long distance between two intersections, for example, photographs of characteristic landmarks along the course will assure the driver that he is on course. Display of the guidance chart and the present vehicle position will tell him at which part of the course he is at present. When he is approaching an intersection, intersection information is output through the screen of the speaker. Audio instructions may be given as needed.

As stated above, a navigation apparatus guides a driver along a course which is set prior to travel. Consequently, the driver only has to obtain the information required for traveling the course set from the guidance chart. In view of this, the road map of this invention only provides the driver with the exact information he needs, irrelevant information being omitted. Road maps are automatically prepared through the navigation programs and are output through the image output control section 17 to be displayed on the screen 18. The block diagram of Fig. 3 schematically shows the image output control section 17.

EP 0 355 232 A2

Referring to Fig. 3, the file 22 stores the road data and map data on the different courses. A course selecting section 32 serves to conduct course search based upon the combination of the previously entered present position and the destination. It then reads out the corresponding road data and map data from the file 22. A vehicle position calculating section 31 serves to calculate the present vehicle position from the information on the course selected and the travel history obtained from the result of computation performed with the signals of the range finder 11 and the rudder angle meter 12. An image edit section 33 edits the images to be displayed on the screen of the display section 18 from the present vehicle position thus obtained, the road data and the map data.

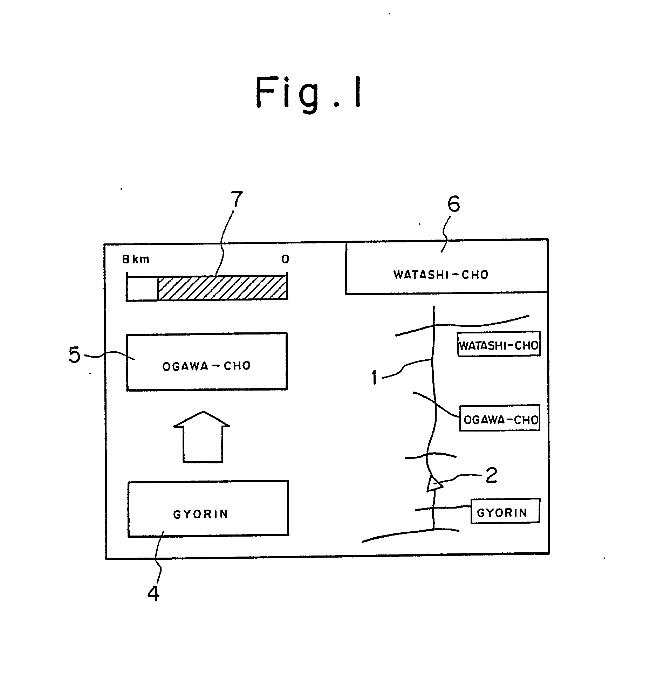

As the vehicle travels along the predetermined course and changes its position, the image edit section 33 changes the range of display on the road map in accordance with the present vehicle position and the position of the destination. The road map is displayed while being turned so that present vehicle position 2 is always in the lower section of the screen, with the road ahead being displayed in the upper section, as shown in Fig. 1. The displayed characters are always kept horizontal so that they will not become harder to read as a result of the map turning.

Accordingly, the sections of the map other than that corresponding to the particular course are omitted, leaving the section in the vicinity of the intersection 4 only, as shown in Fig. 1. The name of the intersection 4 which the vehicle has just passed is displayed on the screen along with the name of the next intersection 5 and that of the guidance intersection 6. An indicator 7 shown in Fig. 1 serves to indicate the distance between the present position and the next intersection 5.

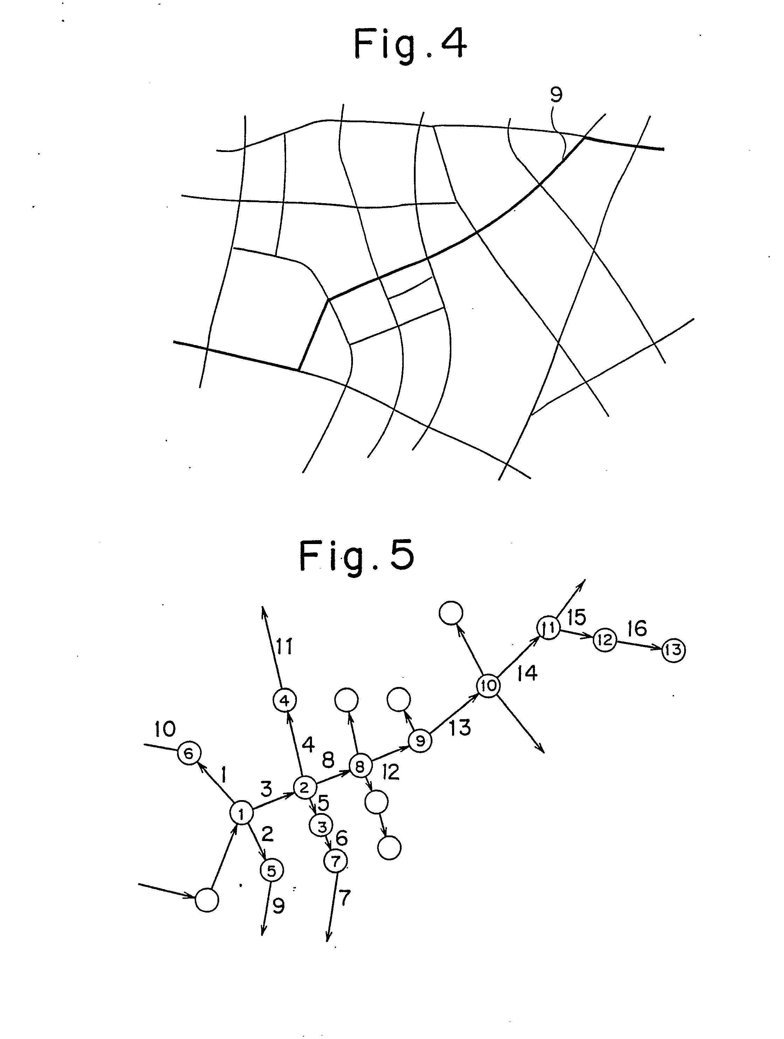

Next, the drawing system for outputting the above display image will be described. The data configuration will first be described with reference to Figs. 4 to 8.

In the map of Fig. 4, a guidance route 9 is indicated by a thick line. The map of Fig. 5 shows the numbers of the roads in the vicinity of the guidance route 9 and those of the intersections on the route, the latter being encircled.

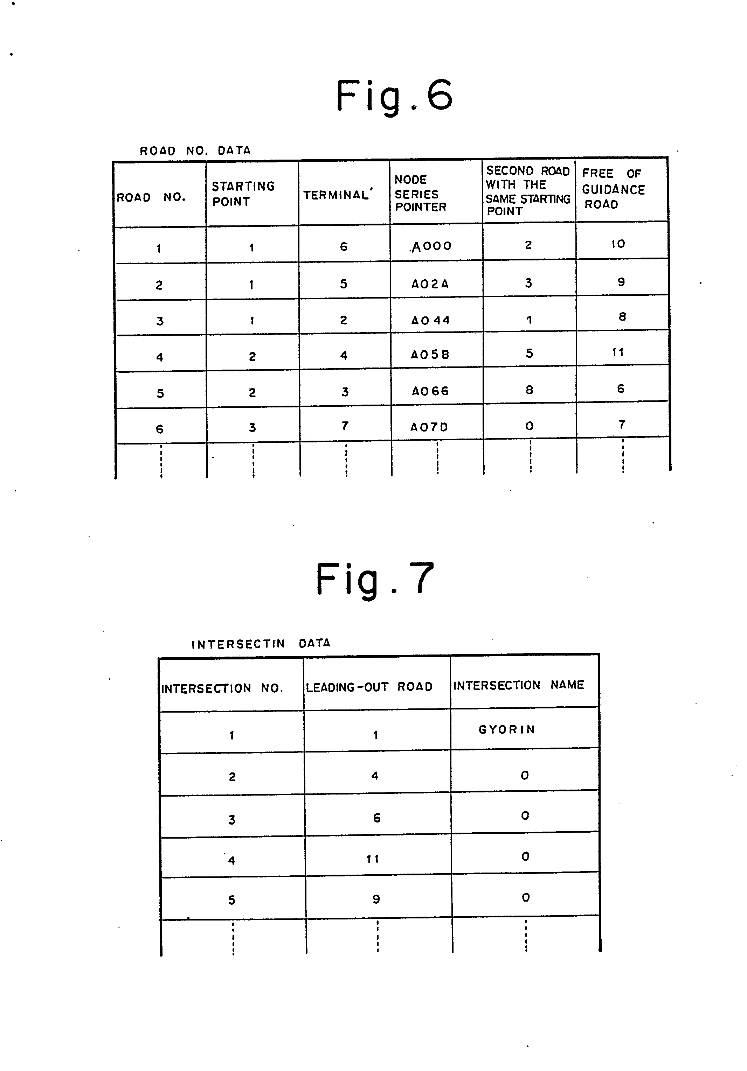

The contents of the road data are shown in Fig. 6. Stored in the data under each road number are the numbers of the starting point and the terminal, the node series pointer, the number of the second one of the roads having the same starting point, and the number of the guidance free road. A node means here the coordinates of a point on a road. A plurality of node series are specified on each road. A node series pointer means the address of the memory in which the first node of a node series is stored. A guidance-free road has been conceived so that output of guidance information such as intersection names may be omitted for roads which are easy of guidance such as straight ones.

Fig. 7 shows the intersection number data in which the numbers of the roads leading out of the intersections as well as the intersection names are stored.

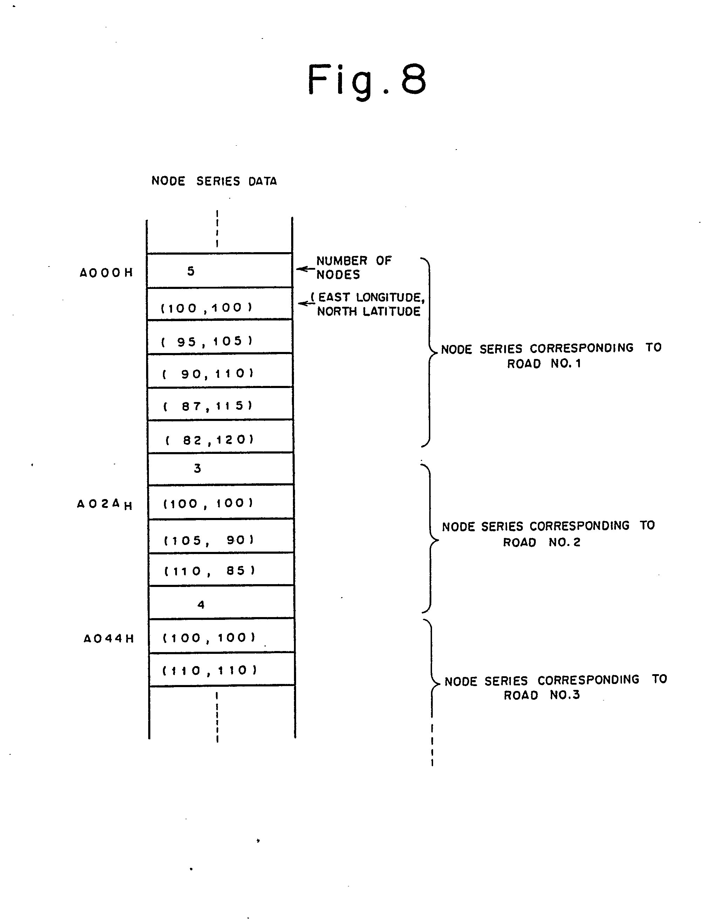

Fig. 8 shows the map data in which the node series data corresponding to the road numbers specified by the node series pointer of Fig. 6 are shown. The data is composed of node numbers and node series coordinates in east longitude and north latitude.

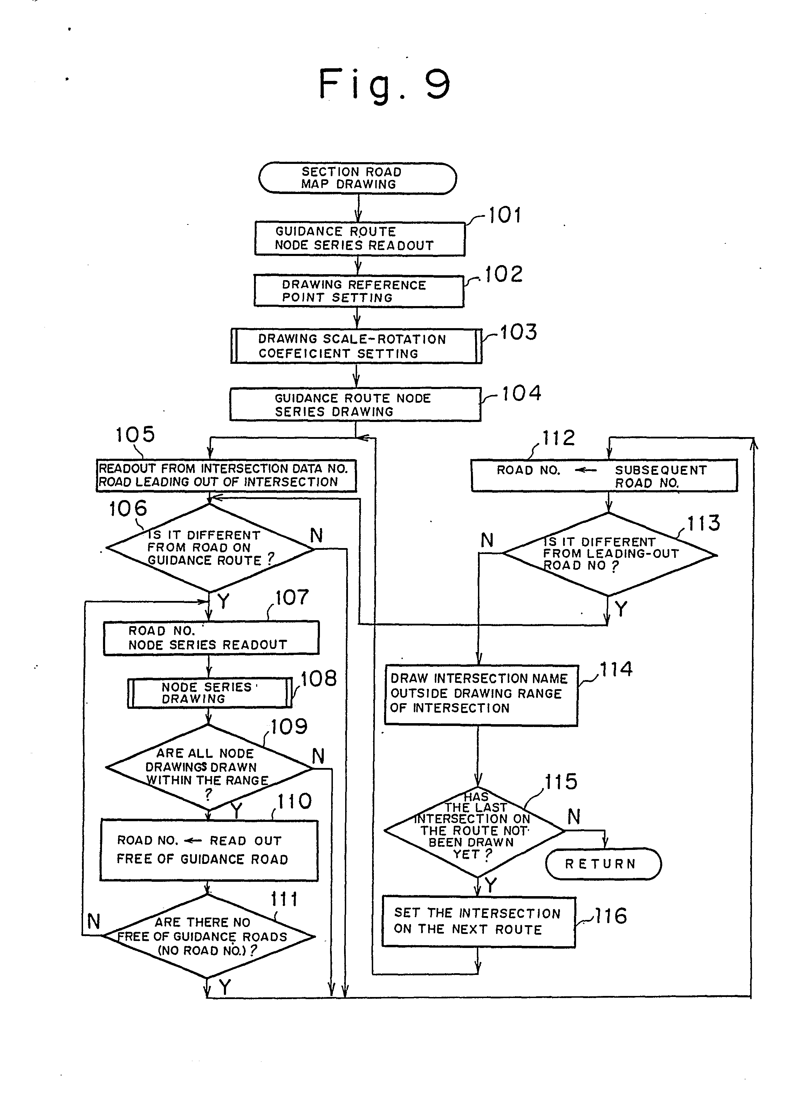

Fig. 9 is a flow chart showing the processing of drawing sections of road between intersections.

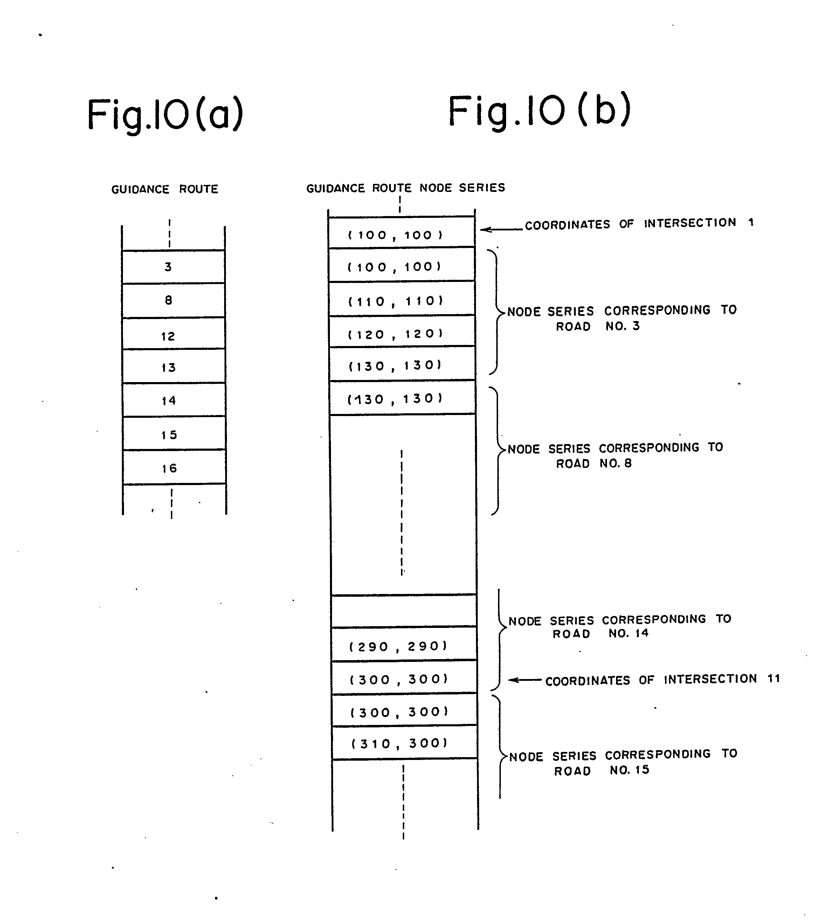

In Step 101, the guidance route node series is read out; the guidance route shown in Fig. 5 is stored in the memory in the order of the road numbers shown in Fig. 10 (A). Based on this, the node series data in Fig. 8 is read out in the order of the road numbers to prepare the data shown in Fig. 10 (B).

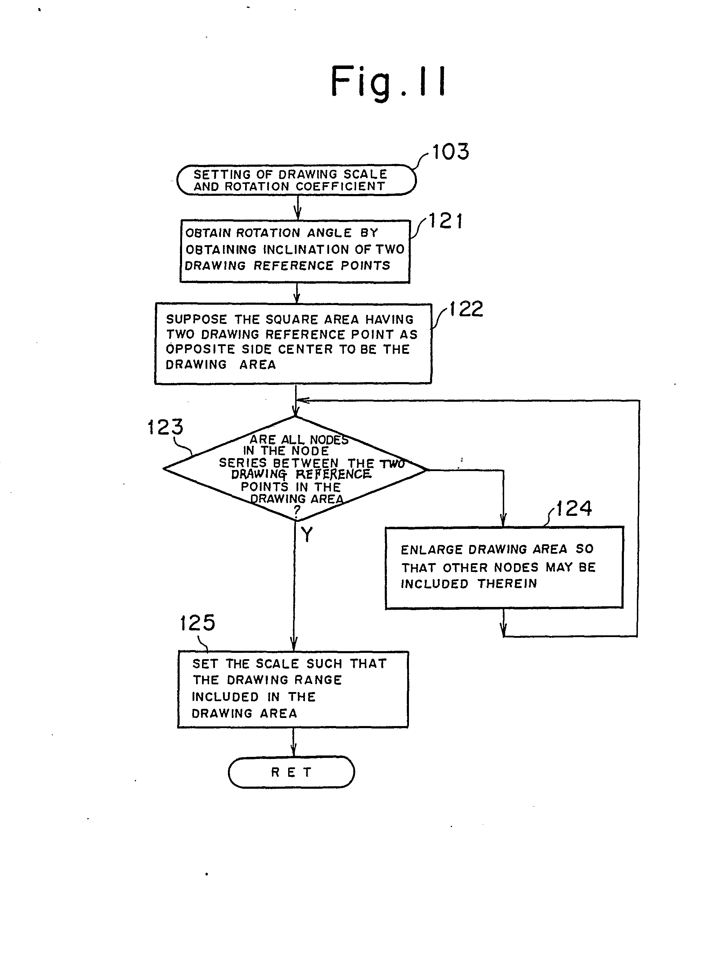

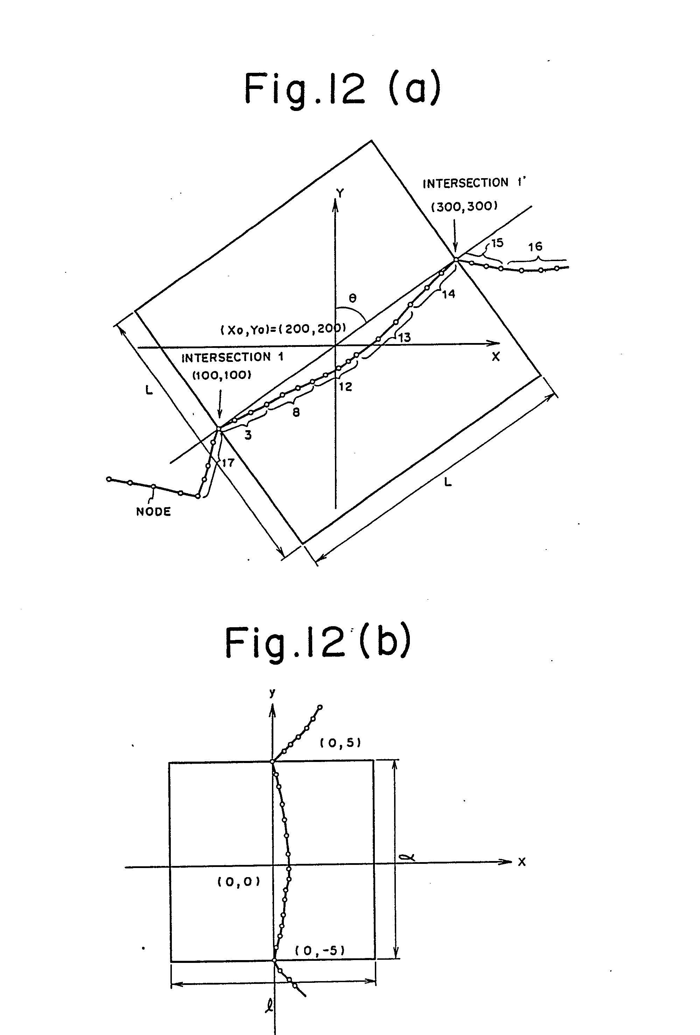

Next, in Step 102, the drawing reference points are set. In Step 103, the drawing scale and the rotation coefficient are set. These setting operations are illustrated in Figs. 11 and 12.

In Step 121, the inclination $\theta$ of a straight line connecting two drawing reference points is obtained so as to obtain the angle of rotation. For example, as shown in Fig. 12 (A), the inclination with respect to the Y-axis of the straight line connecting the intersections 1 and 11, which are drawing reference points, to each other is obtained. Subsequently, in Step 122, a square area L x L is set as the drawing area. The above two drawing reference points are situated in the respective centers of two opposite sides of this square area. Next, in Step 123, it is judged whether or not the node series between the two reference points, for example, all the nodes between the intersections 1 and 11 shown in Fig. 12(A) are in the above drawing area. If not, the drawing range is enlarged in Step 124 so that all the nodes between the reference points can be positioned in the area. If they are in the drawing area, the drawing scale is set in Step 125 in such a manner that the drawing range is included in the drawing area.

When turning Fig. 12 (A) in order to bring it to the position of Fig. 12 (B), for example, the enlargement coefficient $\gamma$ and the rotation coefficient R can be obtained from the equations below. This permits the coordinate transformation from the coordinates (X,Y) on the road data to the coordinates (x,y) on the screen to be effected.

$$\gamma = \ell/L = 10/200$$

4

$$FR = \begin{pmatrix} \cos\theta & -\sin\theta \\ \sin\theta & \cos\theta \end{pmatrix} = \begin{pmatrix} \sqrt{2}/2 & -\sqrt{2}/2 \\ \sqrt{2}/2 & -\sqrt{2}/2 \end{pmatrix}$$

$$\begin{pmatrix} x \\ y \end{pmatrix} = \gamma \cdot R \cdot \left\{ \begin{pmatrix} X \\ Y \end{pmatrix} - \begin{pmatrix} X_0 \\ Y_0 \end{pmatrix} \right\}$$

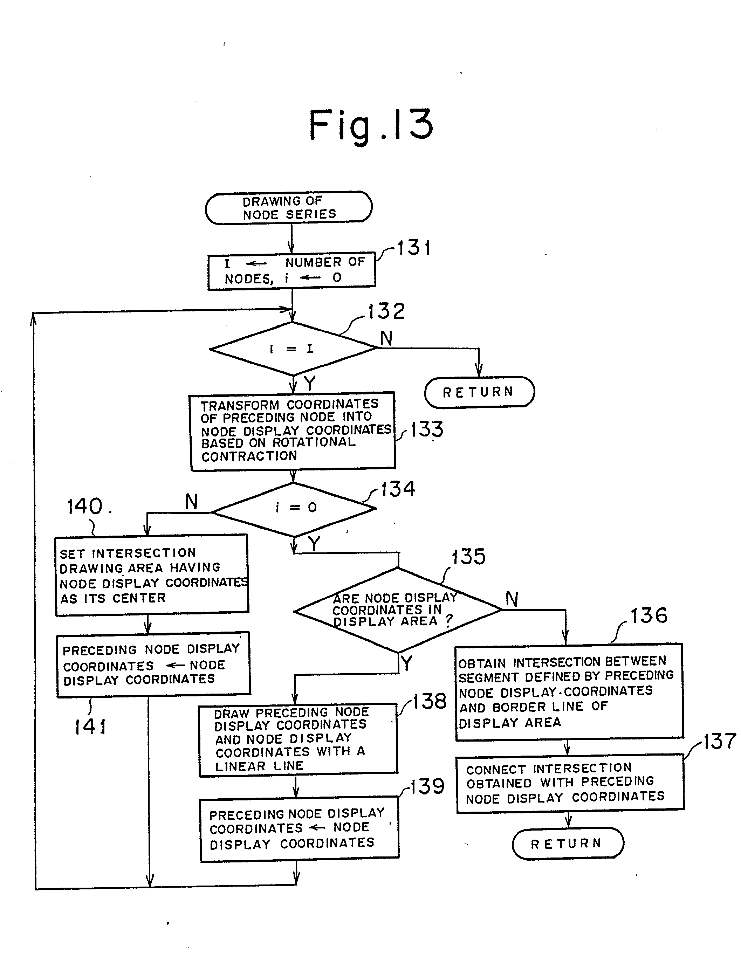

When the setting of the drawing scale and the rotation coefficient are completed in Step 103 of Fig. 9, the process of drawing the node series of the guidance route is conducted in Step 104. The process will be described with reference to Fig. 13.

First, the node number of the road concerned is set as I in Step 131. At the same time, i is set as 0. When i is not equal to I in Step 132, the following procedures are repeated until i becomes equal to I. In Step 133, the coordinates of the i-th node are transformed into node display coordinates by contracting and rotation, as explained with reference to Fig. 12. If in step 134 i is found to be 0 (initial value), it is judged in Step 135 whether or not the above node display coordinates are in the screen area. If the result is NO, the intersection between the segment defined by the preceding node display coordinates and by the above node display coordinates and the border line of the screen are is obtained (Step 136). The intersection obtained is connected to the preceding node display coordinates with a linear line (Step 137), and then the procedure of Step 135 is conducted again.

When the above node display coordinates are found to be in the screen area in Step 135, the preceding node display coordinates and the above node display coordinates are drawn with a linear line, setting the node display coordinates to the preceding ones (Steps 138 and 139). If i is not found to be 0 in Step 134, the drawing area is set in Step 140 with respect to the intersection having the node display coordinates as the center. The node display coordinates are then set to the preceding ones (Steps 140 and 141).

Referring again to Fig. 9, the number of the leading-out road is read out from the intersection data of Fig. 7 in Step 105. It is then judged in Step 106 whether or not it is the same as the road on the guidance route. If not, the node series of the road is read out (Step 107), the node series being drawn in the same manner as described above (Step 108). When in Step 109 all the nodes are drawn within the drawing range, any guidance-free road under the road number is read out. If a guidance-free road is found, the operation of Step 107 is conducted again to draw the node series.

If the results of Steps 106, 109 and 111 are NO, the road number next to the one set in Step 112 is set. This can be obtained by reading out from the intersection data of Fig. 7 the number of the road leading out of the intersection and from Fig. 6 the road having the same starting point. Likewise, the procedures of Steps 105 to 111 are conducted from Step 113. If the result of Step 113 corresponds to the road leading out of the intersection, i.e., if all the roads in the vicinity of the intersection have been drawn, the intersection name is displayed in Step 114 outside the intersection area. It is naturally understood that the above display of the intersection name in Step 114 is only effected when there is an intersection. If no intersections exist, there is no display of intersection name. When in Step 115 the drawing of the last intersection on the guidance route has not been completed yet, the intersection on the next route is set, and the procedures of Steps 105 to 111 are conducted, return being effected upon completion of the drawing of the last intersection on the guidance route.

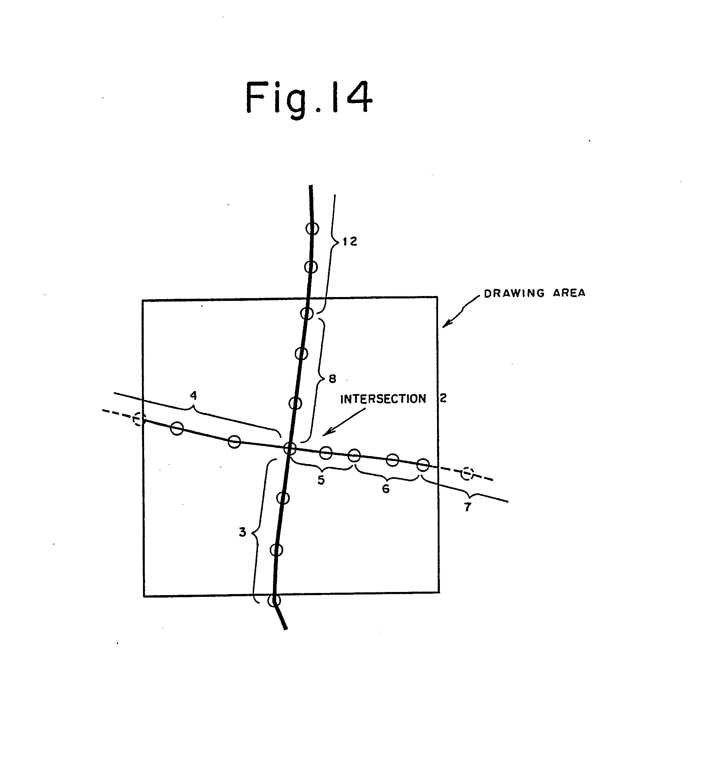

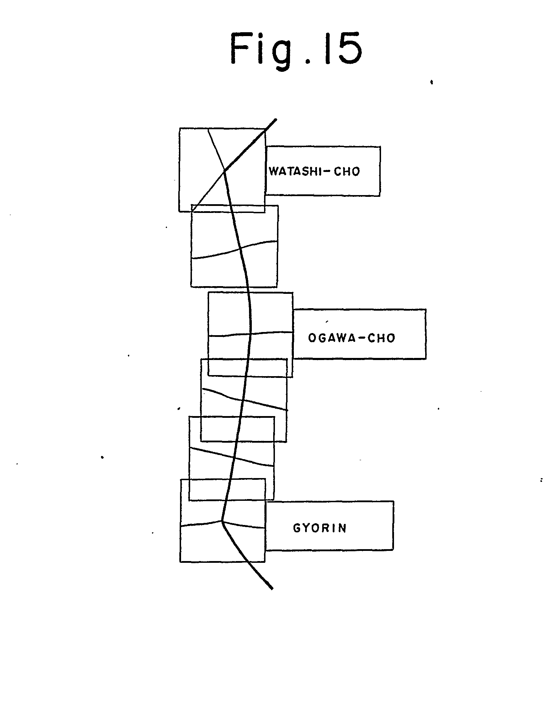

As an example, the case where drawing is conducted with respect to the intersection number 2 will be described with reference to Fig. 14. For the intersection 2 on the guidance route, the number 4 is read out from the data of Fig. 7 as the number of the road leading out of the intersection. It is known by the data of Figs. 5 and 6 that the roads 5 and 8 having the same starting point are roads connected to each other at an intersection. Since the road 8 has been drawn in Step 104, it is not drawn in Step 108. As for the road number 5, the guidance-free road under this number is read out and the road 6 is drawn since the border line of the drawing area of the intersection 2 is not attained at the time of the drawing. If the terminal thereof is within the drawing area, the road number 7 is read out and drawn likewise. By executing the above procedures, the intersections 1 and 2 as well as the roads 8, 9, 10, 11... around them are drawn, as shown in Fig. 15.

This invention should not be construed as restricted to the above embodiment; various modifications can be realized within the scope of invention. For example, while in the above embodiment the intersection names are indicated on the guidance chart, the existence of traffic signals, any bridges, railway crossings or the like in the course may also be indicated thereon.

Further, complicated sections may be displayed in an enlarged state. A multi-window display system in which displays of different scales are given on a single screen may of course be adopted.

As will be appreciated from the above description, the system in accordance with this invention needs no image data as the guidance chart. Instead, a map indicative of information on sections of road between intersections is automatically displayed as the guidance chart on the display screen, so that concise display of the guidance chart can be effected with a small screen, thus eliminating unnecessary information, which helps to avoid any risk of confusion. As a result, observation of the guidance chart for even a short period of time allows a driver to obtain the precise information he needs to follow the course he is supposed to take, and this gives him a feeling of security while driving.

## Claims

1. A road drawing system for a navigation apparatus adapted to output guidance information relating to a previously set course, said system comprising display means for displaying roads connected to a given route and intersections, road data indicating the relationship between roads and intersections, and map data for storing positional information on roads in the form of a multitude of coordinates, the coordinates indicating the position of a road to be displayed being read out from said road data and said map data, and the coordinates thus read out being turned, contracted or enlarged, and transformed into coordinates of the set drawing area of said display means.

2. A road drawing system as claimed in claim 1, wherein the present vehicle position is displayed on a screen representing said display means, the road map being turned to the purpose of displaying the road ahead in the upper section of the screen.

3. A road drawing system as claimed in claim 1 or claim 2, wherein guidance characters are drawn outside the drawing range set for each of said intersections.

# Fig.1

# Fig.2

RANGE FINDER — 11

STEERING ANGLE — 12

INPUT SECTION — 13

INPUT DECODING — 14

INPUT DECODING TABLE — 15

DATA PROCESSING CONTROL SECTION — 16

IMAGE OUTPUT — 17

DISPLAY SECTION — 18

NAVIGATION PROGRAM — 21

ROAD DATA — 22

MAP DATA — 23

# Fig.3

VEHICLE POSITION — 31

COURSE SELECTION — 32

IMAGE EDIT — 33

IMAGE OUTPUT — 17

DISPLAY SECTION — 18

FILE — 22,23

# Fig.4

# Fig.5

# Fig.6

ROAD NO. DATA

| ROAD NO. | STARTING POINT | TERMINAL | NODE SERIES POINTER | SECOND ROAD WITH THE SAME STARTING POINT | FREE OF GUIDANCE ROAD |
|---|---|---|---|---|---|
| 1 | 1 | 6 | A000 | 2 | 10 |
| 2 | 1 | 5 | A02A | 3 | 9 |
| 3 | 1 | 2 | A044 | 1 | 8 |
| 4 | 2 | 4 | A05B | 5 | 11 |
| 5 | 2 | 3 | A066 | 8 | 6 |
| 6 | 3 | 7 | A07D | 0 | 7 |
| ⋮ | ⋮ | ⋮ | ⋮ | ⋮ | ⋮ |

# Fig.7

INTERSECTIN DATA

| INTERSECTION NO. | LEADING-OUT ROAD | INTERSECTION NAME |
|---|---|---|
| 1 | 1 | GYORIN |
| 2 | 4 | 0 |
| 3 | 6 | 0 |
| 4 | 11 | 0 |
| 5 | 9 | 0 |
| ⋮ | ⋮ | ⋮ |

# Fig.8

NODE SERIES DATA

| | |
|---|---|
| A0 0 0 H | 5 |
| | (100 , 100 ) |
| | ( 95 , 105 ) |
| | ( 90 , 110 ) |
| | ( 87 , 115 ) |
| | ( 82 , 120 ) |
| | 3 |
| A 0 2 4 H | (100 , 100 ) |
| | (105 , 90 ) |
| | (110 , 85 ) |
| | 4 |
| A 0 4 4 H | (100 , 100 ) |
| | (110 , 110 ) |

← NUMBER OF NODES

← (EAST LONGITUDE, NORTH LATITUDE)

NODE SERIES CORRESPONDING TO ROAD NO.1

NODE SERIES CORRESPONDING TO ROAD NO.2

NODE SERIES CORRESPONDING TO ROAD NO.3

EP 0 355 232 A2

# Fig. 9

```
        ┌──────────────────────┐
        │   SECTION ROAD       │
        │   MAP DRAWING        │
        └──────────────────────┘
                    │
                    ▼                      ⌐101
        ┌──────────────────────┐
        │   GUIDANCE ROUTE     │
        │   NODE SERIES READOUT│
        └──────────────────────┘
                    │
                    ▼                      ⌐102
        ┌──────────────────────┐
        │   DRAWING REFERENCE  │
        │   POINT SETTING      │
        └──────────────────────┘
                    │
                    ▼                      ⌐103
        ┌──────────────────────┐
        │ DRAWING SCALE-ROTATION│
        │ COEFEICIENT SETTING  │
        └──────────────────────┘
                    │
                    ▼                      ⌐104
        ┌──────────────────────┐
        │  GUIDANCE ROUTE NODE │
        │  SERIES DRAWING      │
        └──────────────────────┘
```

105

READOUT FROM INTERSECTION DATA NO.
ROAD LEADING OUT OF INTERSECTION

112

ROAD NO. ◄── SUBSEQUENT ROAD NO.

106

IS IT DIFFERENT FROM ROAD ON GUIDANCE ROUTE ?   N

113

IS IT DIFFERENT FROM LEADING-OUT ROAD NO ?   N

Y

107

ROAD NO.
NODE SERIES READOUT

108

NODE SERIES DRAWING

114

DRAW INTERSECTION NAME OUTSIDE DRAWING RANGE OF INTERSECTION

109

ARE ALL NODE DRAWINGS DRAWN WITHIN THE RANGE ?   N

110

Y

ROAD NO. ◄── READ OUT FREE OF GUIDANCE ROAD

115

HAS THE LAST INTERSECTION ON THE ROUTE NOT BEEN DRAWN YET ?   N

RETURN

111

N   ARE THERE NO FREE OF GUIDANCE ROADS (NO ROAD NO.) ?

Y

116

SET THE INTERSECTION ON THE NEXT ROUTE

# Fig.lO(a)

GUIDANCE ROUTE

| |
|---|
| 3 |
| 8 |
| 12 |
| 13 |
| 14 |
| 15 |
| 16 |

# Fig.lO(b)

GUIDANCE ROUTE NODE SERIES

| |
|---|
| ( 100 , 100 ) |
| ( 100 , 100 ) |
| ( 110 , 110 ) |
| ( 120 , 120 ) |
| ( 130 , 130 ) |
| ( 130 , 130 ) |
| |
| |
| ( 290 , 290 ) |
| ( 300 , 300 ) |
| ( 300 , 300 ) |
| ( 310 , 300 ) |

COORDINATES OF INTERSECTION 1

NODE SERIES CORRESPONDING TO ROAD NO. 3

NODE SERIES CORRESPONDING TO ROAD NO. 8

NODE SERIES CORRESPONDING TO ROAD NO. 14

COORDINATES OF INTERSECTION 11

NODE SERIES CORRESPONDING TO ROAD NO. 15

# Fig.11

SETTING OF DRAWING SCALE AND ROTATION COEFFICIENT — 103

OBTAIN ROTATION ANGLE BY OBTAINING INCLINATION OF TWO DRAWING REFERENCE POINTS — 121

SUPPOSE THE SQUARE AREA HAVING TWO DRAWING REFERENCE POINT AS OPPOSITE SIDE CENTER TO BE THE DRAWING AREA — 122

123 ARE ALL NODES IN THE NODE SERIES BETWEEN THE TWO DRAWING REFERENCE POINTS IN THE DRAWING AREA ?

124 ENLARGE DRAWING AREA SO THAT OTHER NODES MAY BE INCLUDED THEREIN

Y

125 SET THE SCALE SUCH THAT THE DRAWING RANGE INCLUDED IN THE DRAWING AREA

RET

# Fig.12 (a)

INTERSECTION 1'
(300,300)

15    16

14

θ

(Xo,Yo)=(200,200)

13

INTERSECTION 1
(100,100)

X

L

12

8

3

12

17

NODE

L

# Fig.12 (b)

y

(0,5)

α

X

(0,0)

(0,-5)

ℓ

# Fig.13

DRAWING OF
NODE SERIES

I ← NUMBER OF NODES, i ← 0 —131

132

i = I   N → RETURN

Y

TRANSFORM COORDINATES OF PRECEDING NODE INTO NODE DISPLAY COORDINATES BASED ON ROTATIONAL CONTRACTION —133

134

i = 0

140 N

SET INTERSECTION DRAWING AREA HAVING NODE DISPLAY COORDINATES AS ITS CENTER

PRECEDING NODE DISPLAY COORDINATES ← NODE DISPLAY COORDINATES

141

Y

135

ARE NODE DISPLAY COORDINATES IN DISPLAY AREA ?   N

136

OBTAIN INTERSECTION BETWEEN SEGMENT DEFINED BY PRECEDING NODE DISPLAY COORDINATES AND BORDER LINE OF DISPLAY AREA

Y

DRAW PRECEDING NODE DISPLAY COORDINATES AND NODE DISPLAY COORDINATES WITH A LINEAR LINE —138

CONNECT INTERSECTION OBTAINED WITH PRECEDING NODE DISPLAY COORDINATES —137

PRECEDING NODE DISPLAY COORDINATES ← NODE DISPLAY COORDINATES —139

RETURN

# Fig.14

DRAWING AREA

12

8

INTERSECTION 2

4

5

6

7

3

# Fig.15

WATASHI-CHO

OGAWA-CHO

GYORIN

# Fig.16